# FASCICULE DE BREVET EUROPEEN

(11) **EP 3 184 379 B1**
(45) Date de publication et mention de la délivrance du brevet: **03.04.2019**
(21) Numéro de dépôt: 16203079.5
(22) Date de dépôt: 09.12.2016
(51) Int. Cl.: B60S 1/34

(54) **CAPUCHON ET BRAS D'ENTRAINEMENT POUR UN DISPOSITIF D'ESSUYAGE POUR VEHICULE AUTOMOBILE**
KAPPE UND ANTRIEBSARM FÜR EINE REINIGUNGSVORRICHTUNG EINES KRAFTFAHRZEUGS
CAP AND DRIVING ARM FOR A WIPING DEVICE FOR A MOTOR VEHICLE

(30) Priorité: 23.12.2015 FR 1563199
(43) Date de publication de la demande: 28.06.2017
(73) Titulaire: Valeo Systèmes d'Essuyage, 78322 Le Mesnil Saint Denis (FR)
(72) Inventeur: KUCHLY, Nicolas, 33400 TALENCE (FR); GIRODOT, Cyrille, 63500 SAINT BABEL (FR)
(74) Mandataire: Vincent, Catherine Marie Marguerite

(56) Documents cités:
- EP-A1- 0 468 850
- FR-A1- 2 462 311
- FR-A1- 2 543 897
- FR-A1- 2 607 766
- FR-A5- 2 195 957
- US-A1- 2014 182 076
- US-A1- 2015 329 084

## Description

La présente invention se rapporte au domaine des dispositifs d'essuyage pour véhicules automobiles.

Ces derniers sont couramment équipés de systèmes d'essuie-glaces pour assurer un balayage et un lavage des surfaces vitrées, essentiellement avant et arrière, et, ainsi, pour éviter que la vision qu'a le conducteur de son environnement ne soit perturbée. Ces essuie-glaces comportent classiquement au moins un bras effectuant un mouvement de va-et-vient angulaire, auquel est attaché, à l'une de ses extrémités, un balai d'essuyage allongé, le balai étant porteur d'une lame racleuse réalisée en une matière élastique. En frottant contre la surface à essuyer, la lame racleuse en évacue l'eau et les salissures et les amène en dehors du champ de vision du conducteur.

L'invention concerne des aspects d'un tel dispositif dans lequel le bras d'entraînement est, à sa base, c'est-à-dire à son extrémité opposée à l'extrémité à laquelle est rattaché le balai d'essuyage, lié en rotation à un arbre motorisé d'un moteur d'entraînement par le biais d'un entraîneur, l'arbre motorisé étant sensiblement perpendiculaire à une direction longitudinale selon laquelle s'étend le bras d'entraînement et à la surface vitrée à essuyer.

Pour des raisons réglementaires, ainsi que pour des raisons esthétiques, il est obligatoire d'éviter ou cacher toute partie saillante dans la zone dans laquelle bras d'entraînement, arbre motorisé et entraîneur coopèrent entre eux pour permettre le mouvement de va-et-vient angulaire du bras d'entraînement. En effet, en cas de choc à proximité de la surface vitrée à essuyer, par exemple en cas de choc piéton, toute partie saillante telle que, par exemple, l'extrémité de l'arbre motorisé, peut être source de dommages ou de blessures supplémentaires. A cette fin, il est connu d'utiliser un capuchon dont le rôle est de servir de protection et de cache pour les éléments saillants du bras d'entraînement. EP-A-0468850 montre le préambule des revendications 1 et 7.

La manière dont est attaché un tel capuchon sur le système d'essuyage mérite d'être amélioré. En effet, il convient de garantir une bonne liaison mécanique entre le capuchon et le système d'essuyage, tout en autorisant un démontage du capuchon, de manière à accéder à l'arbre motorisé.

Ces contraintes imposent de revoir la conception du capuchon, la manière par laquelle le capuchon est relié au bras d'entraînement et les étapes d'assemblage d'un tel capuchon sur un bras d'entraînement.

La présente invention a pour but de pallier ces inconvénients et de proposer un dispositif qui présente une robustesse accrue, tout en préservant ses qualités esthétiques de continuité visuelle et en conservant ses performances fonctionnelles de cache et de protection d'éléments saillants de l'ensemble formé par le bras d'entraînement, l'entraîneur et l'arbre motorisé.

Dans ce but, la présente invention a pour objet un capuchon comprenant une première portion apte à couvrir une première extrémité d'un bras d'entraînement d'un système d'essuyage d'un véhicule, notamment automobile, et une deuxième portion comprenant un moyen de fixation pour le fixer, c'est-à-dire l'attacher, sur le bras d'entraînement, caractérisé en ce que ce moyen de fixation comprend au moins une zone de rotation, agencée pour autoriser une rotation du capuchon par rapport au bras d'entraînement, et une zone de verrouillage dudit capuchon sur ledit bras d'entraînement, la deuxième portion se présentant sous la forme d'une patte qui s'étend longitudinalement à l'opposé d'une cavité délimitée par la première portion.

Le capuchon selon l'invention présente également une ou plusieurs des caractéristiques suivantes, prises seules ou en combinaison :
- la zone de rotation et la zone de verrouillage sont délimitées par un appendice qui s'étend à partir d'une face inférieure de la deuxième portion,
- la zone de rotation est séparée de la zone de verrouillage au moins par un ergot, notamment en forme de pointe, cet ergot étant majoritairement dressé vers la deuxième portion, notamment vers la face inférieure de la patte,
- la zone de rotation et la zone de verrouillage se présentent sous forme de creux ménagés dans une lame de la deuxième portion, notamment de l'appendice et constitutive de celle-ci,
- la zone de rotation est ménagée entre la zone de verrouillage et une extrémité distale de la deuxième portion, selon un axe longitudinal du capuchon,
- la zone de rotation comprend une entrée bordée au moins en partie par une dent d'entrée, cette dernière assurant un blocage du capuchon dans certaine position angulaire du capuchon par rapport au bras d'entraînement. Cette dent d'entrée forme avantageusement une extrémité libre de l'appendice,
- l'entrée est bordée par une extrémité distale de la deuxième portion, selon un axe longitudinal du capuchon,
- la zone de verrouillage comprend une nervure longitudinale,
- l'appendice comporte, d'une part, une paroi de rattachement par laquelle il est raccordé à une face inférieure de la patte formant la deuxième portion du capuchon, la paroi de rattachement comprenant un bras attaché à la face inférieure et sensiblement perpendiculaire à cette face inférieure et, d'autre part, une lame qui s'étend, selon une direction longitudinale de la patte, sous la face inférieure de celle-ci, entre la paroi de rattachement et une extrémité distale de ladite patte,
- la zone de verrouillage est située, selon la direction longitudinale selon laquelle s'étend ladite deuxième portion, entre la zone de rotation et la paroi de rattachement par laquelle l'appendice est raccordé à la face inférieure de cette deuxième portion,
- la lame comprend à son extrémité libre une dent d'entrée dont la face supérieure fait face, notamment sensiblement parallèlement à celle-ci, à la face inférieure de la deuxième portion,
- un plateau prend naissance contre la face inférieure de sa deuxième portion, entre l'extrémité distale de cette deuxième portion et la zone par laquelle la paroi de rattachement de l'appendice est raccordée à cette face inférieure,
- le plateau s'étend transversalement, notamment symétriquement, de part et d'autre de la lame de l'appendice,
- la zone de raccordement entre la paroi de rattachement et la lame de l'appendice forme une pointe qui s'étend sous la face inférieure de la lame,
- la première portion délimite une cavité ouverte à son extrémité inférieure et fermée à son extrémité supérieure par une paroi, une face supérieure de la deuxième portion s'étendant dans un plan sensiblement parallèle à un plan dans lequel s'étend la paroi,
- la première portion comprend au moins une paroi latérale qui délimite au moins la cavité et qui s'étend de l'extrémité inférieure de la cavité à la paroi, et dans lequel une échancrure est agencée dans la paroi latérale de cette cavité. Cette échancrure est apte à autoriser le passage du bras d'entraînement dans la cavité. Chacun des bords de l'échancrure s'étend depuis la zone par laquelle une paroi latérale de la deuxième portion de ce capuchon est rattachée à la première portion et jusqu'à un bord inférieur de ladite cavité, de telle manière que l'échancrure soit située en regard de l'appendice porté par la deuxième portion du capuchon,
- la première portion présente une symétrie selon le même axe longitudinal que celui selon lequel s'étend la deuxième portion dudit capuchon,
- au moins un moyen de blocage, prenant notamment la forme d'une dent de blocage, est agencé en partie inférieure d'une surface interne d'au moins une paroi latérale délimitant la cavité, le moyen de blocage étant destiné à verrouiller le capuchon sur un bras d'entraînement,
- selon un mode de réalisation, la zone de rotation est définie par la concavité d'un crochet de rotation qui s'étend à partir de la face inférieure de la patte et la zone de verrouillage est définie par la concavité d'un crochet de verrouillage, le caractère concave du crochet de rotation étant observé vu de la première portion du capuchon alors que le caractère concave du crochet de verrouillage est observé vu de l'extrémité distale de la deuxième portion du capuchon, le crochet de verrouillage étant alors placé entre le crochet de rotation et la première portion du capuchon.

Selon différents modes de réalisation avantageux de l'invention, la première portion du capuchon présente une forme sensiblement cylindrique, tronconique, ou tout autre type de forme dans la mesure où celle-ci présente une symétrie par rapport à un plan longitudinal médian dans lequel s'inscrit l'axe longitudinal selon lequel s'étend la deuxième portion dudit capuchon.

L'invention s'étend également à un bras d'entraînement, notamment un bras d'entraînement apte à coopérer avec un capuchon tel qu'il vient d'être décrit.

L'invention concerne donc également un bras d'entraînement d'un système d'essuyage d'un véhicule, notamment automobile, comprenant une extrémité avant apte à accueillir un balai d'essuyage, une extrémité arrière apte à être lié à un arbre motorisé par l'intermédiaire d'un entraîneur, ainsi qu'un corps situé entre ces deux extrémités, caractérisé en ce qu'il comprend, à son extrémité arrière, une anse dans laquelle est agencé un orifice d'accueil de l'arbre motorisé, et en ce qu'il comprend, entre cette anse et son corps, au moins une poche de réception et une poche de verrouillage aptes à coopérer avec un capuchon qui couvre l'anse.

Le bras d'entraînement selon l'invention présente également une ou plusieurs des caractéristiques suivantes, prises seules ou en combinaison :
- la poche de verrouillage est placée, selon un axe longitudinal dans lequel s'étend majoritairement le bras d'entraînement, entre la poche de réception et l'orifice d'accueil
- poche de réception et poche de verrouillage s'étendent longitudinalement et transversalement dans une zone de transfert d'effort, en présentant par exemple une symétrie selon un axe longitudinal du bras d'entraînement,
- une dimension transversale de la poche de réception est supérieure à une dimension transversale de la poche de verrouillage, mesurées le long de deux droites parallèles,
- poche de réception et poche de verrouillage sont séparées l'une de l'autre par un arbre d'engagement,
- l'arbre d'engagement est de section cylindrique, notamment circulaire, et peut par exemple comprendre un méplat, notamment sensiblement agencé en son centre, selon la direction transversale de l'arbre d'engagement,
- le méplat présente, avec la direction verticale, un angle compris entre 30 et 45 degrés,
- le bras d'entraînement présente un dégagement délimité par deux parois latérales, et de manière complémentaire par un fond du dégagement, en retrait par rapport à une surface supérieure du corps du bras d'entraînement, au moins une des parois latérales étant à niveau, par exemple en étant alignée, avec la surface supérieure du corps du bras d'entraînement.
- une dimension transversale de la poche de verrouillage est inférieure à une dimension transversale séparant les deux parois latérales, mesurées le long d'une même droite,
- une paroi avant du dégagement, située la plus proche du corps du bras d'entraînement, constitue une paroi avant de la poche de réception,
- les parois latérales du dégagement constituent les parois latérales de la poche de réception et se prolongent, en direction de l'anse, le long de la poche de verrouillage, jusqu'à une zone placée entre une paroi arrière de la poche de verrouillage et une paroi avant de l'orifice d'accueil,
- une face supérieure d'une paroi arrière du bras d'entraînement est sensiblement surélevée, et de manière complémentaire ou alternative inclinée, par rapport à une face supérieure du corps du bras d'entraînement,
- une face arrière de la paroi arrière est sensiblement inclinée de telle manière que son bord inférieur soit plus éloigné de l'orifice d'accueil que ne l'est son bord supérieur, selon l'axe longitudinale du bras d'entraînement,
- une épaisseur de matière qui constitue le bras d'entraînement est plus élevée en son anse qu'en son corps.

L'invention s'étend enfin à un ensemble d'essuyage pour véhicule, notamment automobile, caractérisé en ce qu'il comporte un bras d'entraînement et un capuchon tels qu'ils sont décrits dans le présent document. Un tel ensemble d'essuyage est plus particulièrement apte à être installé à l'arrière d'un véhicule automobile, notamment contre une lunette arrière dudit véhicule.

Dans un tel ensemble, la zone de rotation s'étend dans la poche de réception, tandis que la zone de verrouillage s'étend dans la poche de verrouillage, un arbre d'engagement du bras d'entraînement étant reçu dans la zone de verrouillage.

Selon un mode de réalisation, une nervure longitudinale du capuchon, qui fait partie de la zone de verrouillage, s'étend dans une encoche ménagée dans l'arbre d'engagement.

L'invention vise enfin un procédé d'assemblage d'un capuchon sur un bras d'entraînement comportant au moins les étapes suivantes, par exemple réalisées successivement :
a. engagement d'une deuxième portion du capuchon dans une poche de réception du bras d'entraînement, de telle manière qu'une face supérieure d'une dent d'entrée du capuchon soit engagée contre un méplat d'un arbre d'engagement du bras d'entraînement,
b. translation du capuchon selon un axe longitudinal de la deuxième portion, jusqu'à ce que l'arbre d'engagement soit inséré dans une zone de rotation d'un appendice du capuchon,
c. rotation du capuchon autour de l'arbre d'engagement jusqu'à amener une face supérieure de la deuxième portion du capuchon dans une position sensiblement parallèle à une face supérieure d'un corps du bras d'entraînement. De manière optionnelle, les bords d'une échancrure du capuchon viennent, dans ce mouvement de rotation, se placer de part et d'autre de parois latérales du bras d'entraînement de telle manière que la première portion du capuchon vienne s'emboîter sur l'anse du bras d'entraînement, la deuxième portion du capuchon se trouvant engagée dans le dégagement. La forme et les dimensions de la deuxième portion et du dégagement sont avantageusement complémentaires,
d. verrouillage du capuchon avec le bras d'entraînement par une translation vers une extrémité avant du bras d'entraînement jusqu'à ce que l'arbre d'engagement franchisse un ergot séparant la zone de rotation d'une zone de verrouillage et soit accueilli dans une zone de verrouillage du capuchon. De manière optionnelle, la face inférieure de la deuxième portion du capuchon repose alors sur un fond délimitant le dégagement agencée dans le bras d'entraînement, en obturant par exemple totalement les poches de réception et de verrouillage, l'extrémité distale de la deuxième portion du capuchon venant en butée contre une paroi avant du dégagement agencée dans le bras d'entraînement, un fond de l'appendice capuchon étant en contact avec l'arbre d'engagement du bras d'entraînement de part et d'autre du méplat, des parois ou tranches latérales de la deuxième portion du capuchon venant en butée contre les parois latérales du dégagement du bras d'entraînement. Le moyen de blocage agencé dans le capuchon vient alors se placer sous un bord inférieur du bras d'entraînement.

D'autres caractéristiques, détails et avantages de l'invention ressortiront plus clairement à la lecture de la description donnée ci-après à titre indicatif en relation avec les dessins suivants, dans lesquels :
- la figure 1 est une vue en perspective d'un système d'essuyage selon l'invention,
- la figure 2 est une vue de côté d'un capuchon selon un premier mode de réalisation l'invention,
- la figure 3 est une vue de dessous d'un capuchon selon l'invention,
- la figure 4 est une vue de côté d'un détail V d'un capuchon selon l'invention représenté à la figure 2,
- la figure 5 est une vue de dessus d'une partie d'un bras d'entraînement selon un premier mode de réalisation de l'invention,
- la figure 6 est une vue en perspective d'une partie d'un bras d'entraînement selon l'invention,
- la figure 7 est une vue en perspective d'un détail VII d'un bras d'entraînement selon l'invention, tel que représenté sur la figure 6,
- la figure 8 est une vue de côté illustrant une première étape de l'assemblage d'un capuchon et d'un bras d'entraînement, vu en coupe, selon un mode de réalisation de l'invention,
- la figure 9 est une vue de côté d'un capuchon et d'un bras d'entraînement, vu en coupe, selon un mode de réalisation de l'invention, dans une position engagée, mais non verrouillée, dudit capuchon avec ledit bras d'entraînement,
- la figure 10 est une vue de côté d'un capuchon et d'un bras d'entraînement, vu en coupe, selon un mode de réalisation de l'invention, dans leur position assemblée et verrouillée,
- la figure 11 est une vue de côté d'une variante de réalisation d'un capuchon selon l'invention,
- la figure 12 est une vue en perspective de la deuxième portion du capuchon, selon un deuxième mode de réalisation,
- la figure 13 est une vue en perspective montrant le dessus d'une partie d'un bras d'entraînement selon le deuxième mode de réalisation de l'invention,
- la figure 14 est une vue en perspective montrant le dessous d'une partie du bras d'entraînement selon le deuxième mode de réalisation de l'invention,
- les figures 15 à 17 montrent des étapes de montage du capuchon sur un bras d'entraînement, selon le deuxième mode de réalisation de l'invention.

Il faut tout d'abord noter que si les figures exposent l'invention de manière détaillée pour sa mise en oeuvre, ces figures peuvent bien entendu servir à mieux définir l'invention le cas échéant.

Dans la suite de la description, les dénominations longitudinales ou transversales, dessus, dessous, inférieure, supérieure, avant et arrière se réfèrent à l'orientation du bras d'entraînement d'un dispositif d'essuyage d'un véhicule automobile, une fois ce dispositif d'essuyage mis en place sur ce véhicule. La direction longitudinale correspond à celle de l'axe principal du bras d'entraînement selon laquelle il s'étend majoritairement, et les dénominations avant et arrière, selon cette direction, se réfèrent respectivement à l'extrémité du bras d'entraînement à laquelle est rattaché le balai d'essuyage et à l'extrémité opposée de ce bras, par laquelle il est rattaché à son dispositif d'entraînement en rotation. Les orientations transversales correspondent à des droites qui croisent la direction longitudinale, notamment perpendiculairement à l'axe longitudinal du bras d'entraînement dans son plan de rotation. Les directions référencées comme supérieures ou inférieures correspondent à des orientations perpendiculaires au plan de rotation du bras d'entraînement et parallèles à l'axe de rotation de celui-ci, la dénomination inférieure contenant le plan de la surface à essuyer.

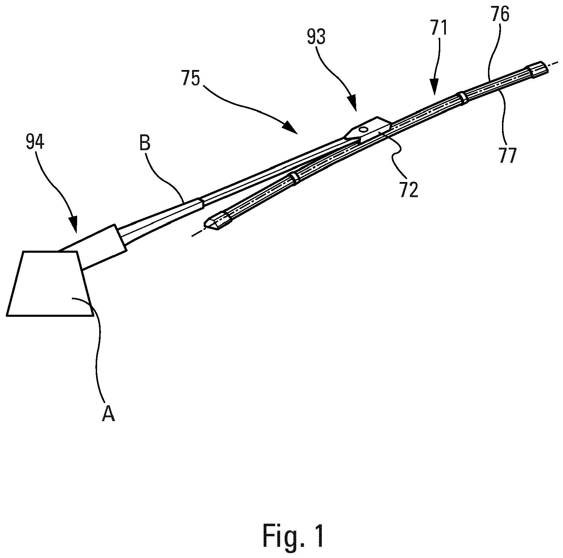

Sur la figure 1, un véhicule automobile est couramment équipé d'un système d'essuyage 75 pour évacuer une eau et/ou des salissures présentes sur une surface vitrée du véhicule automobile. Le système d'essuyage 75 comprend un bras d'entraînement B qui est apte à effectuer un mouvement de va-et-vient angulaire le long et au-dessus de la surface vitrée. La surface vitrée est indifféremment un pare-brise avant ou une lunette arrière équipant le véhicule automobile. Dans suite de la description, la lunette arrière servira d'exemple d'application de la surface vitrée.

Le balai d'essuyage 71 est équipé d'un dispositif de connexion 72 qui assure une liaison mécanique entre une première extrémité 93 du bras d'entraînement B et le balai d'essuyage 71 et permet ainsi de séparer le balai d'essuyage 71 du bras d'entraînement B, en vue d'un remplacement du balai d'essuyage 71.

Le balai d'essuyage 71 peut éventuellement comprendre au moins un déflecteur d'air 76 et une lame racleuse 77. Le déflecteur d'air 76 est prévu pour transformer une pression appliquée par un flux d'air circulant le long de la surface vitrée en une force d'appui du balai d'essuyage 71 contre le pare-brise du véhicule automobile. La lame racleuse 77 est la pièce du balai d'essuyage 71 en contact direct avec la surface vitrée pour évacuer l'eau et/ou les salissures présentes sur cette dernière. Le déflecteur d'air 76 et la lame racleuse 77 forment un ensemble semi-rigide 78 qui est porté par le dispositif de connexion 72.

Ce système d'essuyage 75 est mis en rotation par un moteur solidaire de la carrosserie du véhicule. Ce moteur comprend un arbre motorisé qui est commandé directement ou indirectement par le moteur. Cet arbre motorisé traverse la carrosserie ou la surface vitrée, et la partie qui débouche de cette surface vitrée sert de point de fixation du bras d'entraînement B. Une telle fixation peut être réalisée par un écrou qui plaque une deuxième extrémité 94 du bras d'entraînement B contre l'arbre motorisé. Selon l'invention, cette fixation est couverte par un capuchon A dont la conception va être présentée ci-dessous.

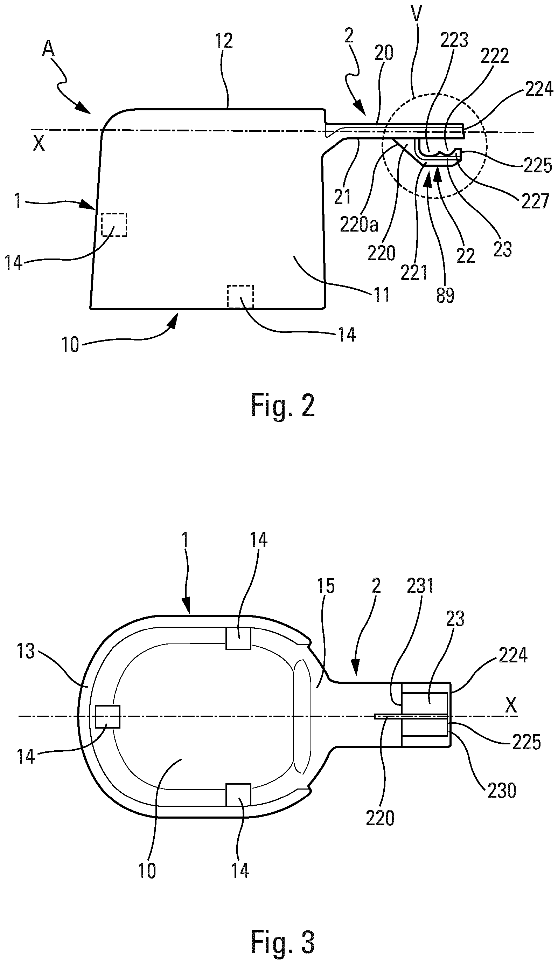

Les figures 2 à 4 illustrent un premier mode de réalisation d'un capuchon A selon l'invention. En référence à ces figures, le capuchon A selon l'invention comporte une première portion 1, autrement appelé corps. Dans ce qui suit, la dénomination de "corps" sera indifféremment utilisée pour désigner la première portion 1 du capuchon A selon l'invention. Ce corps comprend une cavité 10 délimitée par au moins une paroi latérale 11 de faible épaisseur, ouverte à l'une de ses extrémités et fermée à son extrémité opposée par une paroi supérieure 12. Avantageusement, une surface d'appui 13 formée par la section de la paroi latérale 11 à l'extrémité ouverte du corps 1 est sensiblement parallèle à la paroi supérieure 12 de ce corps 1. Selon un mode de réalisation non exclusif de l'invention, le corps 1 du capuchon peut être légèrement évasé vers son extrémité ouverte. En d'autres termes, le périmètre extérieur de la paroi latérale 11 est plus élevé au niveau de la surface d'appui 13 qu'il ne l'est au niveau de la paroi supérieure 12. Selon le premier mode de réalisation de l'invention illustré par les figures 2 à 11, la paroi latérale 11 qui délimite la cavité 10 a, en section selon un plan sensiblement parallèle à sa surface d'appui 13 ou à sa paroi supérieure 12, la forme d'un rectangle dont les angles sont arrondis. Selon d'autres modes de réalisation alternatifs, la paroi latérale 11 peut présenter d'autres formes, à titre d'exemples non exhaustifs, celle d'une portion de cylindre ou de tronc de cône dont le diamètre au niveau de la paroi supérieure 12 serait inférieur au diamètre au niveau de la surface d'appui 13.

Selon l'invention, au moins une dent de blocage 14 est agencée ou s'étend à l'intérieur de la cavité 10, sur une face intérieure de la paroi latérale 11 qui délimite cette cavité, à proximité de l'extrémité inférieure de celle-ci. Le rôle de cette dent sera détaillé plus loin. Selon le mode de réalisation illustré par les figures 2 à 4, une seule dent de blocage 14 est agencée sur la face intérieure de la paroi latérale 11. Selon d'autres modes de réalisation alternatifs, plusieurs dents de blocage 14, par exemple regroupées deux par deux et face à face, peuvent être agencées sur la face intérieure de cette même paroi.

Selon l'invention, le capuchon A comporte également une deuxième portion 2 qui s'étend longitudinalement à partir d'une face extérieure de la paroi latérale 11 de la première portion 1 de ce même capuchon, au voisinage de la paroi supérieure 12 de cette première portion, et à l'opposé de la cavité 10 délimitée par la paroi latérale 11 de cette même première portion. Avantageusement, et comme le montrent les figures, cette deuxième portion 2 prend la forme d'une patte rectiligne issue de matière avec la première portion 1, et qui s'étend à l'opposé de la cavité 10, sensiblement parallèlement à la paroi supérieure 12 de cette cavité. Dans ce qui suit, la dénomination de "patte" sera indifféremment utilisée pour désigner cette deuxième portion 2 du capuchon A selon l'invention. Selon le premier mode de réalisation de l'invention illustré par les figures 2 à 11, cette patte 2 porte un moyen de fixation 89 qui permet de relier mécaniquement le capuchon A au bras d'entraînement, et de sécuriser son attachement à ce bras.

La patte 2 comporte une face supérieure 20 sensiblement parallèle à la paroi supérieure 12 du corps 1 du capuchon A. Bien que parallèle, ou sensiblement parallèle à la paroi supérieure 12 du corps 1, la face supérieure 20 de la patte 2 s'étend le long d'un plan distinct d'un plan dans lequel s'inscrit la paroi supérieure 12 du corps 1, notamment en étant décalé vers la surface d'appui 13. De manière alternative, la face supérieure 20 de la patte 2 peut s'inscrire dans un plan commun au plan dans lequel s'inscrit la paroi supérieure 12 du corps 1.

Avantageusement, la patte 2, en sa zone de rattachement au corps 1, est légèrement évasée pour renforcer la solidité du capuchon A selon l'invention. Afin de permettre la mise en place du capuchon A sur un bras d'entraînement B d'un dispositif d'essuyage, la paroi latérale 11 du corps 1 du capuchon A présente une échancrure 15 qui s'étend, selon la direction verticale précédemment définie, depuis la zone de rattachement de la patte 2 au corps 1 jusqu'au bord inférieur dudit corps 1, c'est-à-dire jusqu'à la surface d'appui 13. Avantageusement, la dimension transversale de l'échancrure 15 est supérieure à celle de la patte 2, mesuré le long de la même direction transversale, comme le montre plus précisément la figure 3.

Selon le mode de réalisation de l'invention plus particulièrement illustré par les figures 2 à 4, la patte 2 présente une forme générale sensiblement rectangulaire en vue de dessus et elle s'étend, comme le montre la figure 3, sensiblement selon la direction d'un axe longitudinal X du capuchon A, axe longitudinal X qui forme également pour cette patte un axe de symétrie longitudinale. Selon le mode de réalisation de l'invention plus particulièrement illustré par la figure 3, une dent de blocage 14 telle que précédemment définie est agencée sensiblement sur l'axe longitudinal X, dans le prolongement longitudinal de la patte 2 à laquelle elle fait face, à mi-hauteur de la face intérieure de la paroi latérale 11 opposée à ladite patte 2. Deux autres dents de blocage 14 peuvent également être ménagées sur la face intérieure de la paroi latérale 11, l'une en face de l'autre et selon une direction perpendiculaire à un plan longitudinale médian passant par l'axe longitudinal X du capuchon A. Ces deux dents de blocage 14 sont ménagées à proximité immédiate de la surface d'appui 13 du capuchon A.

Selon l'invention, la patte 2 comporte, à partir de sa face inférieure 21 opposée à sa face supérieure 20, un appendice 22 qui va maintenant être décrit de manière détaillée, cet appendice 22 en combinaison avec la face inférieure 21 de la patte 2 formant un exemple de réalisation du moyen de fixation 89.

Selon l'invention, l'appendice 22, avantageusement issu de matière avec la patte 2 du capuchon A, s'étend sensiblement en position transversale centrale à partir de la face inférieure 21 de la patte 2, comme le montre plus particulièrement la figure 3. Cet appendice 22 s'étend donc sensiblement le long de l'axe longitudinal X précédemment défini.

L'appendice 22 est rattaché à la face inférieure 21 de la patte 2 par une paroi de rattachement 220 avantageusement placée, selon la direction de l'axe longitudinal X, entre une extrémité proximale par laquelle la patte 2 est rattachée à la première portion 1 du capuchon, et une extrémité distale 224 de cette patte 2 opposée à l'extrémité proximale. Avantageusement, la paroi de rattachement 220 s'étend, à partir de la face inférieure 21 de la patte 2, sensiblement perpendiculairement à celle-ci. En référence aux orientations précédemment définies, cette paroi 220 s'étend donc sensiblement verticalement, en direction de la partie inférieure du capuchon A, c'est-à-dire en direction de l'extrémité ouverte du corps 1 de ce capuchon. La paroi de rattachement comprend un bord arrière référencé 220a dont la fonction sera détaillée plus loin.

Selon l'invention, l'appendice 22 de la patte 2 se prolonge ensuite par une lame 221, avantageusement de même épaisseur, transversalement, que la paroi de rattachement 220. Selon le premier mode de réalisation de l'invention illustré par les figures 2 à 11, la lame 221 est, selon la direction de l'axe longitudinal X, très légèrement plus courte que la partie de la patte 2 sous la face inférieure 21 de laquelle elle s'étend.

Selon une caractéristique avantageuse de l'invention, une zone de rotation 222 et une zone de verrouillage 223 sont délimité par l'appendice 22. Selon le mode de réalisation de l'invention illustré par les figures 2 à 4, la zone de rotation 222 prend la forme d'un creux agencé dans une portion supérieure de la lame 221, c'est-à-dire la portion de cette lame qui se situe au regard de la face inférieure 21 de la patte 2. Avantageusement, la zone de rotation 222 est agencée à proximité de l'extrémité libre de la lame 221, c'est-à-dire qu'elle est proche de l'extrémité distale 224 de la patte 2 du capuchon A. L'extrémité distale 224 de la patte 2 est formée par l'extrémité libre de la patte 2 dans l'axe longitudinal de celle-ci.

Plus précisément, la zone de rotation 222 est agencée dans la portion supérieure de la lame 221 de telle manière qu'une portion de cette paroi supérieure, sensiblement plane et parallèle à la face inférieure 21 de la patte 2 du capuchon A, demeure, entre une extrémité distale 225 de la lame 221 et la zone de rotation 222. En d'autres termes, la zone de rotation 222 est séparée de l'extrémité libre de la lame 221 par une portion de cette lame, qui délimite ainsi, avec l'extrémité distale 225 et la face inférieure 226 de cette dernière, une dent d'entrée 227 dont le rôle sera précisé plus loin.

On constate sur ces figures que la zone de rotation 222 comprend une entrée 61, par laquelle un arbre d'engagement du bras d'entraînement est apte à entrer. Une telle coopération sera expliquée en détails plus loin. Cette entrée 61 est bordée au moins en partie par la dent d'entrée 227. Dans le mode de réalisation illustré ici, l'entrée 61 est également bordée par l'extrémité distale 224 de la deuxième portion 2, prenant notamment la forme de la patte 20.

Selon le mode de réalisation de l'invention illustré par les figures 2 à 4, la zone de verrouillage 223 prend également la forme d'un creux agencé dans la portion supérieure de la lame 221, entre la zone de rotation 222 et la paroi 220 de rattachement de l'appendice 22 à la face inférieure 21 de la patte 2 du capuchon A, c'est-à-dire aussi entre la zone de rotation 222 et le corps 1 du capuchon A. Avantageusement, zone de rotation 222 et zone de verrouillage 223 sont séparées entre elles par un ergot 228 formant un cran de blocage.

Avantageusement, la paroi 220 de rattachement de l'appendice 22 à la face inférieure 21 de la patte 2 comporte un bord arrière incliné 220a qui fait sensiblement face à l'échancrure 15 agencée dans la paroi latérale 11 du corps 1 en s'éloignant de celle-ci depuis la zone par laquelle la paroi 220 est rattachée à la patte 2 du capuchon A selon l'invention et jusqu'à une face inférieure 226 de la lame 221 de l'appendice 22. Selon le mode de réalisation de l'invention représenté par les figures 2 à 4, la zone de rattachement du bord incliné 220a et de la face inférieure 226 de la lame 221 forme une pointe 229 qui s'étend sensiblement au-dessous de la face inférieure 226 de la lame 221, et dont le rôle sera précisé plus loin.

Selon une autre caractéristique avantageuse de l'invention, la patte 2 du capuchon A comporte, en sa face inférieure 21, un plateau 23, visible sur la figure 3. Avantageusement, le plateau 23 s'étend sensiblement depuis l'extrémité distale 224 de la patte 2 jusqu'à la zone de jonction de la paroi 220 de rattachement de l'appendice 22 avec la face inférieure 21 de la patte 2. Le plateau 23 s'étend par exemple symétriquement par rapport un plan passant par l'axe longitudinal X et perpendiculaire à la patte 2, comme le montre la figure 3. En d'autres termes, et en référence aux orientations précédemment définies, la lame 221 de l'appendice 22 s'étend sensiblement sous le plateau 23 de la patte 2 du capuchon A selon l'invention. Selon le mode de réalisation de l'invention illustré par les figures 2 à 4, le plateau 23 a sensiblement la forme d'un rectangle dont le grand côté s'étend selon la direction de l'axe longitudinal X de la patte 2, et ses parois extrémales selon cette direction longitudinale, respectivement référencées 230 et 231, sont les petits côtés dudit rectangle.

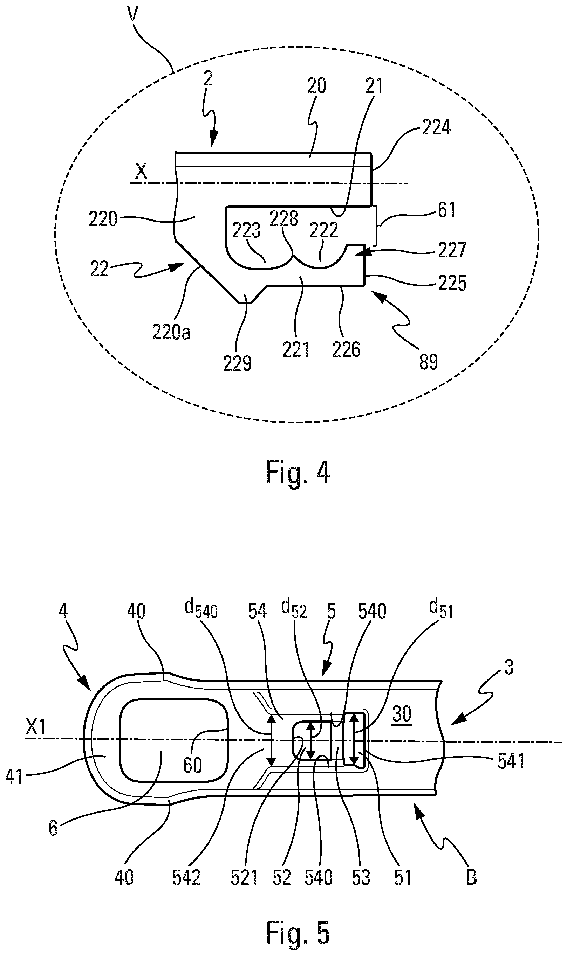

Tel qu'il vient d'être décrit, le capuchon A selon l'invention est donc constitué d'une première portion, ou corps 1, délimitant une cavité 10, et d'une deuxième portion, ou patte 2, dont un appendice 22 forme, avec ladite patte 2, un crochet qui permet, comme il sera détaillé plus loin, la coopération du capuchon A avec un bras d'entraînement B qui va maintenant être décrit, en référence aux figures 5 à 7.

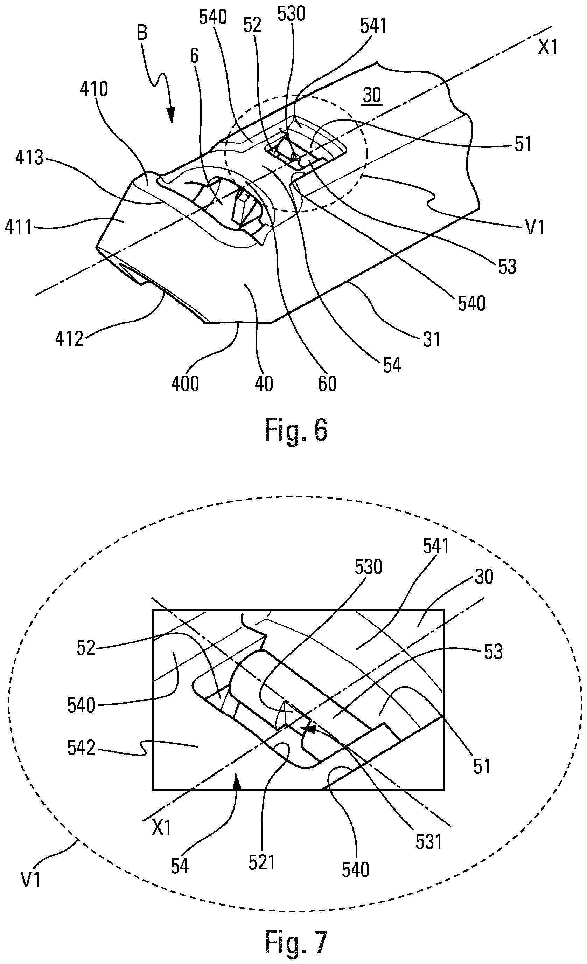

Avantageusement issu de matière en une unique pièce, le bras d'entraînement B s'étend longitudinalement selon la direction d'un axe X1 représenté sur la figure 5. A l'une de ses extrémités non représentée sur les figures, ou extrémité avant, il comporte des moyens de liaison à un balai d'essuyage. A son extrémité opposée, ou extrémité arrière, plus particulièrement illustrée par les figures 5 et 7, il comprend au moins un moyen de liaison à un entraîneur et au moins un dispositif de liaison à un capuchon A selon l'invention, tel que décrit précédemment et illustré par les figures 2 à 4. Entre ces deux extrémités s'étend un corps 3 du bras d'entraînement B. Selon l'invention, le bras d'entraînement B comprend, à son extrémité arrière, une anse 4 et une zone de transfert d'effort 5.

L'anse 4 est formée par deux parois latérales 40 et une paroi arrière 41 du bras d'entraînement B, ainsi que par une paroi 60 de la zone de transfert d'effort 5, qui délimitent ensemble un orifice d'accueil 6. Avantageusement, et comme le montre plus précisément la figure 6, une face supérieure 410 de la paroi arrière 41 du bras d'entraînement B est sensiblement surélevée par rapport à une face supérieure de la zone de transfert d'effort 5 et par rapport à une face supérieure 30 du corps 3 du bras d'entraînement B. La face supérieure 410 de la paroi arrière 41 du bras d'entraînement B est, en outre, légèrement inclinée vers la zone de transfert d'effort 5. Concomitamment, une face arrière 411 de cette même paroi arrière 41 est également sensiblement inclinée de telle manière que son bord inférieur 412 soit plus éloigné, selon la direction longitudinale X1 du bras d'entraînement B, de l'orifice d'accueil 6, que ne l'est son bord supérieur 413. Il s'ensuit que les parois latérales 40 de l'anse 4, qui forment également la jonction de cette anse 4 avec la zone de transfert d'effort 5, présentent des bords supérieurs sensiblement inclinés vers la zone de transfert d'effort 5. Avantageusement, et comme le montre également la figure 6, des bords inférieurs 400 des parois latérales 40 de cette anse 4 sont également inclinés, de manière à assurer la jonction entre le bord inférieur 412 de la paroi arrière 41 et un bord inférieur 31 du corps 3 du bras d'entraînement B. Il est à noter ici, comme le montrent les figures, que chaque paroi latérale 40 de l'anse 4 forme, avec les parois latérales correspondantes, respectivement de la zone de transfert d'effort 5 et du corps 3 du bras d'entraînement B, une unique paroi continue.

Selon une caractéristique de l'invention, la zone de transfert d'effort 5 comporte une première poche 51, autrement appelée poche de réception, et une deuxième poche 52, autrement appelée poche de verrouillage. Chacune de ces poches s'étend longitudinalement et transversalement dans la zone de transfert d'effort 5, en présentant une symétrie selon un plan longitudinal médian passant par l'axe longitudinal X1 du bras d'entraînement B. Selon l'invention, la poche de verrouillage 52 est placée, selon l'axe longitudinal X1 du bras d'entraînement B, entre la poche de réception 51 et l'orifice d'accueil 6. Avantageusement, une dimension transversale d₅₁ de la poche de réception 51 est supérieure à celle de la poche de verrouillage 52, référencée d₅₂, et elle est également supérieure à une dimension transversale du plateau 23 agencé en face inférieure 21 de la patte 2 du capuchon A. Selon le premier mode de réalisation de l'invention illustré par les figures 2 à 11, poche de réception 51 et poche de verrouillage 52 sont traversantes, c'est-à-dire qu'elles forment des trous traversants dans le bras d'entraînement B. Alternativement, ces poches pourraient être formées par des cavités fermées ou des trous borgnes, ménagés pas déformation de la paroi du bras d'entraînement.

Selon une autre caractéristique de l'invention, le bras d'entraînement B comprend un arbre d'engagement 53. Poche de réception 51 et poche de verrouillage 52 sont séparées l'une de l'autre, selon l'axe longitudinale X1 du bras d'entraînement B, par l'arbre d'engagement 53, illustré en détail par la figure 7.

Tel qu'illustré sur cette figure 7, l'arbre d'engagement 53, avantageusement issu de matière avec le bras d'entraînement B, a sensiblement la forme d'un cylindre, par exemple plein. Selon l'invention, un axe de l'arbre d'engagement 53 s'étend selon une direction transversale sensiblement perpendiculaire à celle de l'axe longitudinal X1 du bras d'entraînement B.

On notera que l'arbre d'engagement 53 comporte un méplat 530. Plus précisément, selon le premier mode de réalisation de l'invention illustré par les figures 2 à 11, le méplat 530 est constitué par le fond d'une encoche 531 agencée radialement dans le cylindre qui constitue l'arbre d'engagement 53. Selon ce mode de réalisation, l'encoche 531 est avantageusement obtenue par enlèvement radial d'un volume sensiblement parallélépipédique dans le cylindre formé par l'arbre 53, à partir d'une génératrice de celui-ci. Selon l'invention, l'encoche 531 est sensiblement agencée au centre de l'arbre d'engagement 53 selon la direction transversale. C'est ainsi que cette encoche 531 est sensiblement coupée par l'axe longitudinal X1 du bras d'entraînement, l'arbre d'engagement 53 présentant ainsi une symétrie par rapport à cet axe longitudinal. A titre alternatif ou complémentaire, l'encoche 531 peut être décalée latéralement d'un côté ou de l'autre d'un plan longitudinal médian passant par l'axe longitudinal X1 du bras d'entraînement B.

Avantageusement, l'encoche 531 est agencée de telle manière que le méplat 530 qui constitue son fond présente, avec la direction verticale définie précédemment, un angle compris entre 5 et 75 degrés. Selon le mode de réalisation, mais non exclusif de l'invention, plus particulièrement illustré par les figures, cet angle se situe entre 30 et 45 degrés. Cette angle défini l'inclinaison dans laquelle il faut positionner le capuchon pour l'introduire sur l'arbre d'engagement 53.

Selon une autre caractéristique de l'invention, la surface supérieure du bras d'entraînement B comprend, au niveau de la zone de transfert d'effort 5, un dégagement rentrant 54. En d'autres termes, la surface supérieure de la zone de transfert 5 se trouve, selon la direction verticale définie précédemment, légèrement plus bas que la surface supérieure 30 du corps 3 du bras d'entraînement B. Avantageusement, la forme et la profondeur de ce dégagement 54 sont complémentaires de la forme et de l'épaisseur de la patte 2 du capuchon A. Plus précisément, le dégagement 54 est délimité longitudinalement par au moins deux parois latérales 540 et par une paroi avant 541, toutes avantageusement biseautées, et un fond 542 de ce dégagement forme la surface supérieure de la zone de transfert d'effort 5.

Selon une caractéristique avantageuse de l'invention dans son premier mode de réalisation illustré par les figures 2 à 11, la paroi avant 541 du dégagement 54, c'est-à-dire la paroi de ce dégagement la plus proche du corps 3 du bras d'entraînement B, constitue également la paroi avant de la poche de réception 51, c'est-à-dire la paroi de cette poche de réception la plus proche du corps 3 du bras d'entraînement B. Par ailleurs, les parois latérales 540 du dégagement 54 constituent avantageusement les parois latérales de la poche de réception 51. Avantageusement également, ces parois latérales 540 se prolongent ensuite, en direction de l'anse 4, le long de la poche de verrouillage 52, jusqu'à une zone placée entre une paroi arrière 521 de la poche de verrouillage 52 et la paroi avant 60 de l'orifice d'accueil 6. Selon une autre caractéristique de l'invention dans son mode de réalisation illustré par les figures 5 à 7, la dimension transversale du fond 542 de la zone de transfert 5, référencée d₅₄₀ et mesurée entre les parois latérales 54, perpendiculairement à l'axe longitudinal X1 du bras d'entraînement B, est supérieure à la dimension transversale d₅₂, selon la même direction, de la poche de verrouillage 52. Avantageusement également, l'axe longitudinal X1 s'inscrit également dans un plan de symétrie longitudinale pour le fond 542 de la zone de transfert 5 entre les parois latérales 540 du dégagement 54.

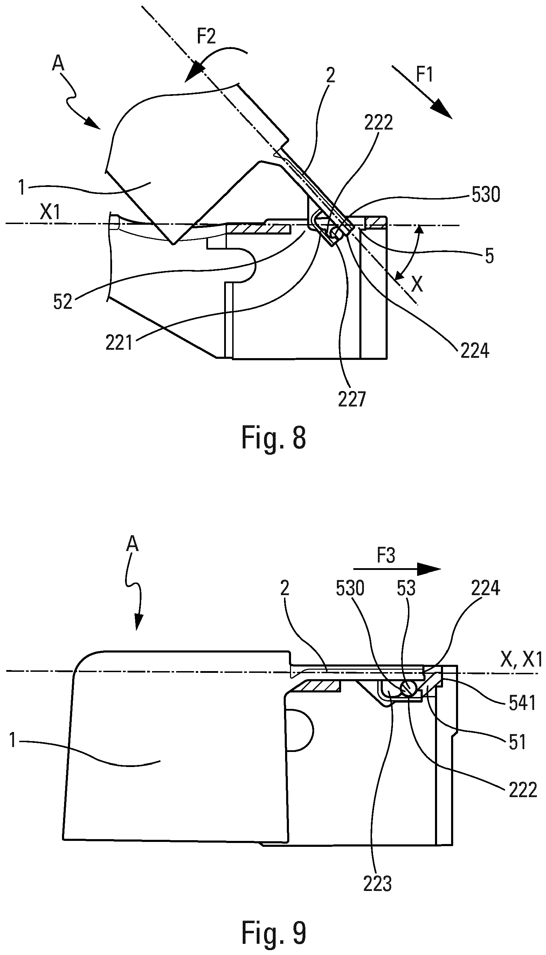

Les figures 8 à 10 illustrent l'assemblage d'un capuchon A selon le mode de réalisation de l'invention décrit précédemment et illustré par les figures 2 à 4 avec un bras d'entraînement B selon le mode de réalisation de l'invention qui vient d'être décrit et qui est illustré par les figures 5 à 7. Il est à noter que, sur la figure 8, le capuchon A est montré schématiquement en perspective alors que le bras d'entraînement B est montré en coupe selon un plan vertical contenant l'axe longitudinal X1 de ce bras.

En référence à cette figure, l'extrémité distale 224 de la patte 2 du capuchon A est tout d'abord engagée dans la poche de réception 51, de telle manière qu'une portion supérieure de la dent d'entrée 227, par exemple sensiblement plane, soit engagée contre le méplat 530 agencé dans l'arbre d'engagement 53. Pour ce faire, et compte tenu de l'angle que forme le méplat 530 avec la direction verticale, le capuchon A doit être présenté incliné. Avantageusement, et comme le montre la figure 8, l'arbre d'engagement 53 se trouve alors pris entre la face inférieure 21 de la patte 2 du capuchon A et la portion supérieure de la dent d'entrée 227 de l'appendice 22.

De manière complémentaire, l'arbre d'engagement 53, de part et d'autre de l'encoche 531, se trouve pris entre le plateau 23 et la face inférieure 21 de la patte 2 du capuchon A, c'est-à-dire au sein du crochet formé par l'appendice 22 et par la patte 2 du capuchon A.

L'exercice d'une légère poussée selon la direction représentée par la flèche F1 sur la figure 8, c'est-à-dire selon une direction parallèle l'axe longitudinal X du capuchon, conduit ensuite à faire glisser, d'une part, la portion supérieure de la dent d'entrée 227 le long du méplat 530 et, d'autre part, le plateau 23 contre une génératrice de l'arbre d'engagement 53 opposée au méplat 530, jusqu'à ce que cet arbre d'engagement 53 se trouve engagé dans la zone de rotation 222 de l'appendice 22. Le méplat 530 et le plateau 23 constituent ainsi des moyens de guidage de l'engagement du capuchon A avec le bras d'entraînement B.

La mise en place du capuchon A se poursuit par l'exercice d'une rotation selon la direction représentée par la flèche F2 sur la figure 8, jusqu'à ce que la face supérieure de la patte 2 se trouve parallèle à la face supérieure 30 du corps 3 du bras d'entraînement B. Plus précisément, cette rotation s'effectue autour d'un axe matérialisé par l'axe de l'arbre d'engagement 53. La présence du plateau 23 issu de la face inférieure 21 de la patte 2 permet un tel positionnement, ce plateau se trouvant contre l'arbre d'engagement 53, transversalement de part et d'autre du méplat 530, et permettant ainsi une forme d'emboîtement de la face inférieure 21 de la patte 2 sur cet arbre. Avantageusement, les dimensions de la patte 2 et du corps 1 du capuchon A sont définies de telle manière que, dans ce mouvement de rotation, les bords de l'échancrure 15 du corps 1 du capuchon A viennent se placer de part et d'autre des parois latérales du bras d'entraînement B, le corps 1 du capuchon A venant ainsi couvrir l'anse 4 et s'emboîter sur la zone de jonction entre cette anse et la zone de transfert d'effort 5 de ce bras d'entraînement.

Il résulte des formes et des dimensions du dégagement 54 agencé sur le bras d'entraînement B, ainsi que de la configuration de la face inférieure 21 de la patte 2, qu'une fois cette patte 2 ramenée parallèle à la face supérieure 30 du corps 3 du bras d'entraînement B, la face supérieure 20 de cette patte 2 se trouve en continuité avec la surface supérieure 30 du corps du bras d'entraînement. Une telle configuration permet de conserver un niveau esthétique acceptable une fois le capuchon rapporté sur le bras.

Dans cette position d'engagement, et comme le montre plus précisément la figure 9, l'extrémité distale 224 de la patte 2 du capuchon A, se trouve placée dans la poche de réception 51, à distance de la paroi avant 541 délimitant celle-ci, et la pointe 229 de l'appendice 22 s'étend dans la poche de verrouillage 52 du bras d'entraînement B.

Le verrouillage du capuchon A avec le bras d'entraînement B est réalisé par une translation du capuchon vers le bras d'entraînement B, selon une direction matérialisée par la flèche F3 sur la figure 9. Dans une telle situation l'axe longitudinal X du capuchon est confondu avec l'axe longitudinal X1 du bras d'entrainement.

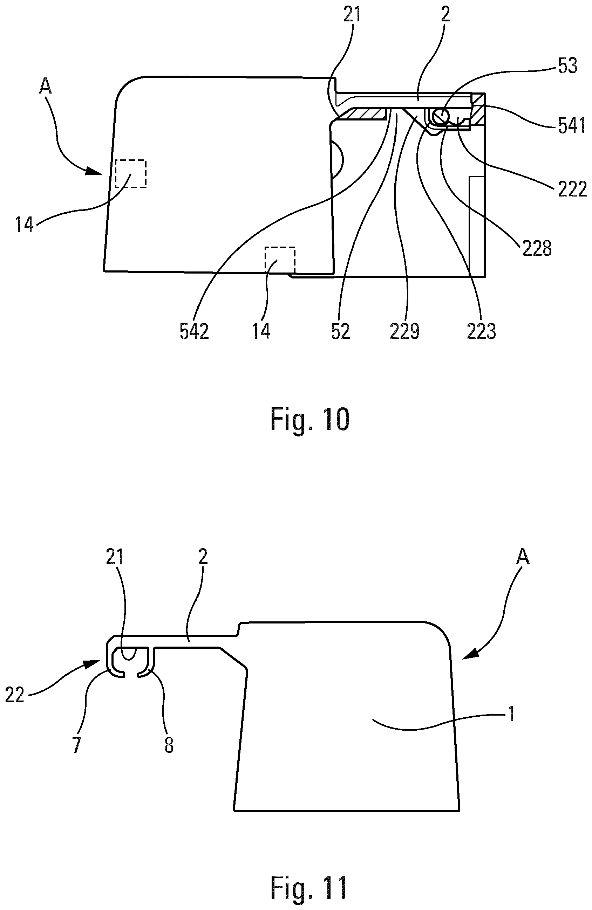

Dans ce mouvement de translation, il résulte des formes et dimensions conférées, selon l'invention, à ce capuchon, que l'arbre d'engagement 53 franchit l'ergot 228 séparant la zone de rotation 222 de la zone de verrouillage 223, pour être accueilli dans la zone de verrouillage 223. Il résulte des formes et dimensions de la patte 2 que, dans la position verrouillée, plus particulièrement illustrée par la figure 10, l'extrémité distale de cette patte 2 se trouve en butée contre la paroi avant 541 de la poche de réception 51. Il résulte également de la forme et des dimensions du dégagement 54 configuré en partie supérieure du bras d'entraînement B que, dans cette position verrouillée, la face inférieure 21 de la patte 2 repose sur le fond 542 du dégagement 54. De manière optionnelle, des parois latérales de la patte 2 viennent en butée, sur toute leur longueur, contre les parois latérales 540 de ce même dégagement 54.

Concomitamment à ce mouvement final de translation, la dent de blocage 14 agencée en partie inférieure de la face intérieure de la paroi latérale du corps 1 du capuchon A vient avantageusement se placer sous le bord inférieur de la paroi arrière de l'anse ou, plus généralement, selon le mode de réalisation choisi, sous un bord inférieur du bras d'entraînement B, réalisant ainsi un moyen de blocage du capuchon A avec ce bras d'entraînement, au moins selon la direction verticale.

Le capuchon A se trouve ainsi verrouillé avec le bras d'entraînement B au moins :
- par l'engagement de l'arbre 53 du bras d'entraînement B dans la zone de verrouillage 223 du capuchon A, et/ou
- par la coopération des parois latérales de la patte 2 du capuchon A avec les parois latérales 540 du dégagement 54 agencé dans le bras d'entraînement B, et/ou
- par la coopération de la dent de blocage 14 agencée dans le capuchon A avec un bord inférieur 412 du bras d'entraînement B.

Dans cette position, la surface supérieure 20 de la patte 2 du capuchon A se trouve, comme le montrent les figures, en continuité visuelle avec la surface supérieure du bras d'entraînement B, et il est à noter que la patte 2 du capuchon A forme une obturation totale à la fois de la poche de réception 51 et de la poche de verrouillage 52.

Par ailleurs, le corps 1 du capuchon A est, dans cette position verrouillée, emboîté sur l'anse 4 du bras d'entraînement qui accueille l'arbre motorisé autour duquel ce bras est entraîné en rotation, ainsi que l'entraîneur et l'ensemble des éléments nécessaires à la mise en oeuvre de cette rotation.

Le bras d'entraînement B selon l'invention, tel qu'il vient d'être décrit et illustré par les figures, ne comporte pas de discontinuité susceptible de générer une fragilité mécanique lorsqu'un couple élevé est appliqué au bras d'entraînement lors du mouvement de va-et-vient angulaire. En effet, le dégagement 54 agencé en partie supérieure du bras d'entraînement B est de faible profondeur. Par ailleurs, l'invention prévoit, selon une caractéristique avantageuse, que l'épaisseur de matière constituant le bras d'entraînement soit, au niveau de l'anse 4 et de la zone de transfert 5, supérieure à l'épaisseur de matière constituant le corps 3 de ce bras d'entraînement. En outre, le matériau constituant le capuchon A est avantageusement choisi à la fois pour ses propriétés de résistance mécanique et de déformation. Ainsi, des matériaux tels que les polymères connus sous les acronymes POM ou PBT peuvent, à titre d'exemples non exhaustifs, être utilisés. De plus, la présence de la pointe 229 sur l'appendice 22 du capuchon A constitue une zone de renfort de cette partie lors de sa déformation pour permettre la mise en place de l'arbre d'engagement 53 du bras d'entraînement B successivement dans la zone de rotation 222, puis, dans la zone de verrouillage 223 du capuchon A. L'invention atteint ainsi un but qu'elle s'était fixé, en proposant un ensemble robuste.

Pour désaccoupler le capuchon A et le bras d'entraînement B, il suffit de procéder en sens inverse de l'opération d'assemblage décrite ci-dessus.

La figure 11 illustre un mode de réalisation alternatif d'un capuchon A selon l'invention, dans lequel l'appendice 22 de ce capuchon est remplacé par un crochet de rotation et un crochet de verrouillage, respectivement référencé 7 et 8, qui délimitent chacun, avec la face inférieure 21 de la patte 2 de ce capuchon A, respectivement la zone de rotation 222 et la zone de verrouillage 223, les autres éléments du capuchon A étant tels que décrits précédemment et illustrés par les figures précédentes.

Selon ce mode de réalisation, les deux crochets 7 et 8 sont concaves et leurs concavités se font face. Plus précisément, la concavité du crochet de rotation 7 est orientée vers le corps 1 du capuchon A, et la concavité du crochet de verrouillage 8 est orientée vers l'extrémité distale de la patte 2 du capuchon A. La mise en place et le verrouillage d'un tel capuchon A avec un bras d'entraînement B tel que décrit précédemment et illustré par les figures se fait de la même manière que celle décrite plus haut, c'est-à-dire successivement par engagement de l'arbre d'engagement 53 du bras d'entraînement avec le crochet de rotation 7 du capuchon, puis par rotation du capuchon autour de l'axe matérialisé par cet arbre d'engagement jusqu'à ce que la surface supérieure 20 de la patte 2 du capuchon A soit parallèle à la surface supérieure 30 du corps 3 du bras d'entraînement B, et, enfin, par translation vers l'avant, c'est-à-dire vers l'extrémité distale de la patte 2 du capuchon A, jusqu'à ce que l'arbre d'engagement 53 du bras d'entraînement B soit inséré dans le crochet de verrouillage 8 du capuchon A.

Le premier mode de réalisation décrit ci-dessus permet d'assurer une continuité visuelle du bras d'entraînement. Cela permet de conformer le bras d'entraînement de manière à ce qu'il ne comporte pas de discontinuités, comme cela est visible notamment sur la figure 5. Le bras d'entraînement ne présente donc pas de fragilité mécanique accrue, ou d'amorces de rupture placées dans une zone du bras d'entraînement dans laquelle le couple appliqué par le moteur d'entraînement est élevé. Ce phénomène est d'autant plus prononcé que le balai d'essuyage, attaché à l'extrémité opposée du bras d'entraînement, doit évacuer de la surface vitrée des éléments d'un certain poids, comme de la neige accumulée sur la surface vitrée, notamment.

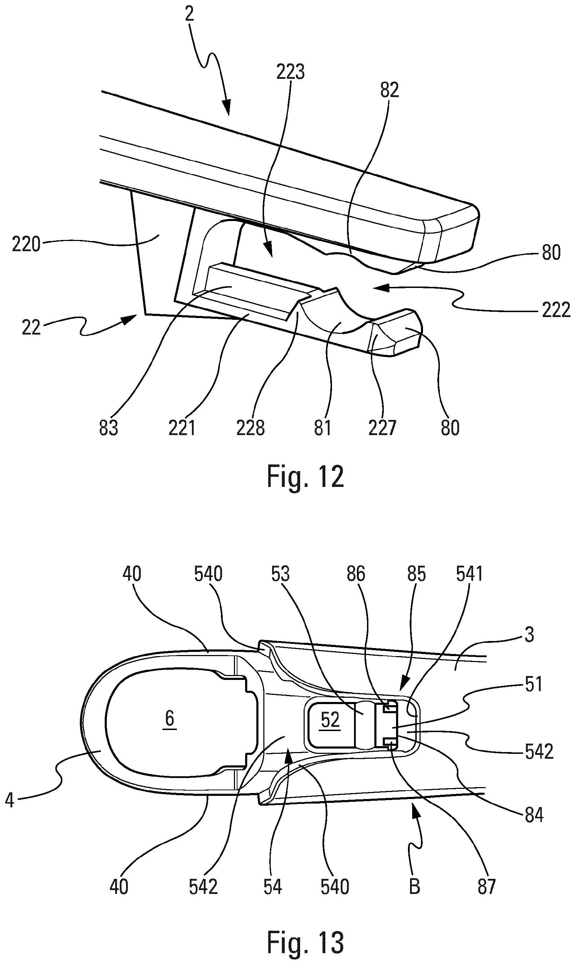

La figure 12 montre l'extrémité de la deuxième portion 2 du capuchon A, selon un deuxième mode de réalisation. La description ci-dessous présente les différences avec le premier mode de réalisation et pour les éléments communs, on se reportera à la description ci-dessous.

Un moyen de fixation 89 comprend la zone de rotation 222, cette dernière étant adaptée pour autoriser une rotation du capuchon par rapport au bras d'entraînement du deuxième mode de réalisation. Ce moyen de fixation comprend aussi la zone de verrouillage 223 dudit capuchon sur ce bras d'entraînement.

L'entrée 61 est ici bordée par un chanfrein 80, et elle donne accès à la zone de rotation 222. Comparée au premier mode de réalisation, la dent d'entrée 227 présente une section triangulaire, notamment sensiblement identique à la point 228. Cette zone de rotation est délimitée par une première paroi semi-circulaire 81 et par une deuxième paroi semi-circulaire 82, ménagée face à la première paroi semi-circulaire 81.

L'ergot 228 forme une transition entre la zone de rotation 222 et la zone de verrouillage 223. Selon ce second mode de réalisation, cette zone de verrouillage 223 comprend une nervure longitudinale 83 qui s'étend le long de l'axe longitudinal X de la deuxième portion 2 du capuchon A. Selon cet exemple de réalisation, cette nervure longitudinale 83 partage en deux la zone de verrouillage 223. La nervure longitudinale 83 prend naissance sur la lame 221 et s'étend en direction de la face inférieure 21 de la deuxième portion 2. Cette nervure longitudinale s'étend donc dans l'espace formant la zone de verrouillage 223. Selon cet exemple de réalisation, la nervure longitudinale 83 est rectiligne entre la paroi de rattachement 220 et l'ergot 228. Comme dans le premier mode de réalisation, la zone de rotation 222 coopère avec un arbre d'engagement de manière à guider une rotation du capuchon autour de cet arbre, tandis que la zone de verrouillage 223 impose une translation du capuchon vis-à-vis du bras jusqu'à une position où il est bloqué en position finale.

La deuxième portion 2 de capuchon du deuxième mode de réalisation de l'invention est adaptée pour coopérer avec un bras d'entraînement illustré à la figure 13. La description ci-dessous présente les différences avec le bras d'entraînement du premier mode de réalisation et pour les éléments communs, on se reportera à la description ci-dessous.

Le dégagement 54 est bordé par des parois latérales 540 donc la particularité est qu'elles se poursuivent sur les parois latérales 40 de l'anse 4 jusqu'au bord inférieur 31 qui délimite une arête du bras d'entraînement B.

La paroi 60 délimite l'orifice d'accueil 6 et le fond 542 du dégagement 54 débute au niveau de cette paroi 60 bordant l'orifice d'accueil 6. Comme pour le premier mode de réalisation de l'invention, le fond 542 est percé pour y ménager une poche de réception 51 de la zone de rotation du capuchon et une poche de verrouillage 52 coopérant avec la zone de verrouillage du capuchon. Ces deux poches sont séparées l'une de l'autre par l'arbre d'engagement 53. On remarque sur la figure 13 que le fond 542 du dégagement 54 s'étend au-delà de la poche de réception 51en direction du corps 3 du bras d'entraînement B. La poche de réception 51 est ainsi délimitée par une tranche 84 qui est distincte de la paroi 541 qui délimite le dégagement 54.

Selon ce deuxième mode de réalisation, le bras d'entraînement B comprend au moins un guide 85 dont la fonction est de guider la translation de l'appendice 22 sous le fond 542, lors que l'opération de verrouillage du capuchon sur le bras d'entraînement. Un tel guide 85 est par exemple formé par au moins une jambe 86 qui prend naissance sur une paroi interne du bras d'entraînement B. Dans le cas d'espèce, le guide 85 comprend deux jambes 86 et 87 qui s'étendent vers l'anse 4 à partir du corps 3 du bras.

La conformation des deux jambes 86 et 87 entre lesquelles est ménagé un espace permet à la zone de rotation du capuchon de venir se prendre sur l'épaisseur du fond 542 située entre la tranche 84 de la poche de réception 512 et la paroi 541 qui délimite le dégagement 54.

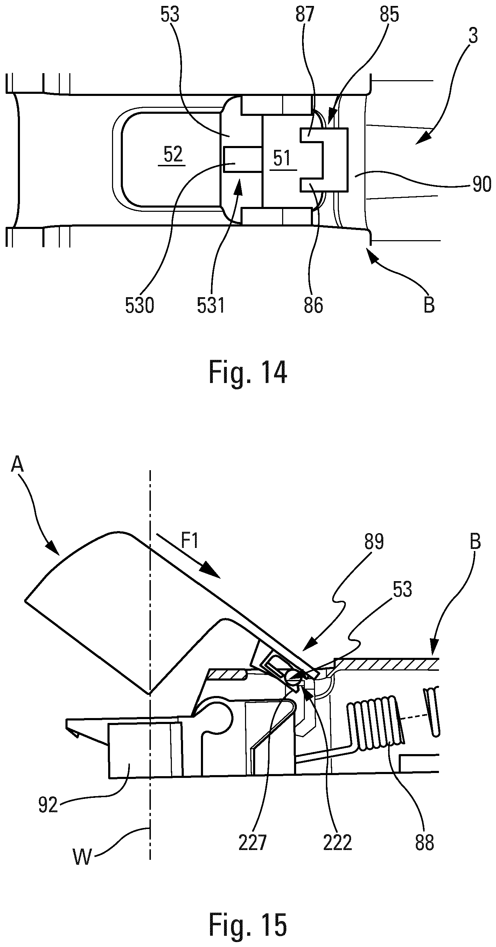

La figure 14 montre la même partie du bras d'entraînement que celle illustrée à la figure 13, mais vu de dessous. Le corps 3 du bras d'entraînement B comprend ainsi la paroi interne référencée ici 90, à partir de laquelle est issu le guide 85, en particulier les jambes 86 et 87.

L'arbre d'engagement 53 comprend une encoche 531 dont le fond prend la forme d'un méplat 530. La position angulaire de ce méplat 530 est différente de sa position dans le premier mode de réalisation. En effet, l'encoche 531 est agencée de telle manière que le méplat 530 qui constitue son fond présente, avec la direction verticale définie précédemment, un angle compris entre 85 et 95 degrés. Selon ce deuxième mode de réalisation, mais non exclusif de l'invention, plus particulièrement illustré par les figures 12 à 17, cet angle est égal à 90 degrés. Alors que dans le premier mode de réalisation, ce méplat 530 coopère avec la zone de rotation 222 du capuchon, il est ici prévu que ce méplat 530 coopère avec la zone de verrouillage 223 du capuchon selon le deuxième mode de réalisation.

Dans le premier mode de réalisation, le méplat 530 définis l'angle avec lequel il faut introduire le capuchon sur l'arbre d'engagement 3. Dans le deuxième mode de réalisation, la position angulaire du méplat 530 autorise la translation du capuchon par coopération entre la nervure longitudinale de l'appendice et l'encoche 531.

Les figures 15 à 17 illustrent les étapes de montage et de verrouillage du capuchon A sur le bras d'entraînement B. Ces quatre figures montrent également un entraineur 92 dont la fonction est de relier mécaniquement le bras d'entraînement B à l'arbre motorisé, tout en autorisant une articulation entre l'entraîneur 92 et le bras d'entraînement B. L'arbre motorisé est illustré de manière schématique par un trait d'axe référencé W. L'articulation entre le bras d'entraînement B et l'entraîneur 92 est contrôlée par un ressort 88, représenté ici de manière partielle. Ce ressort 88 génère également la force d'appui du balai d'essuyage sur la surface vitrée.

Sur la figure 15 est illustrée l'introduction du capuchon A sur le bras d'entraînement B, notamment l'introduction du moyen de fixation 89 sur l'arbre d'engagement 53. Cette première étape est opérée par une translation du capuchon A, telle qu'illustrée par la flèche F1. A l'issue de cette translation, l'arbre d'engagement 53 est reçu dans la zone de rotation 222, la zone de verrouillage demeurant libre. Une flexibilité de la lame 221 permet à la dent d'entrée 227 de s'éloigner de la face inférieure 21, ouvrant ainsi l'accès à la zone de rotation 222.

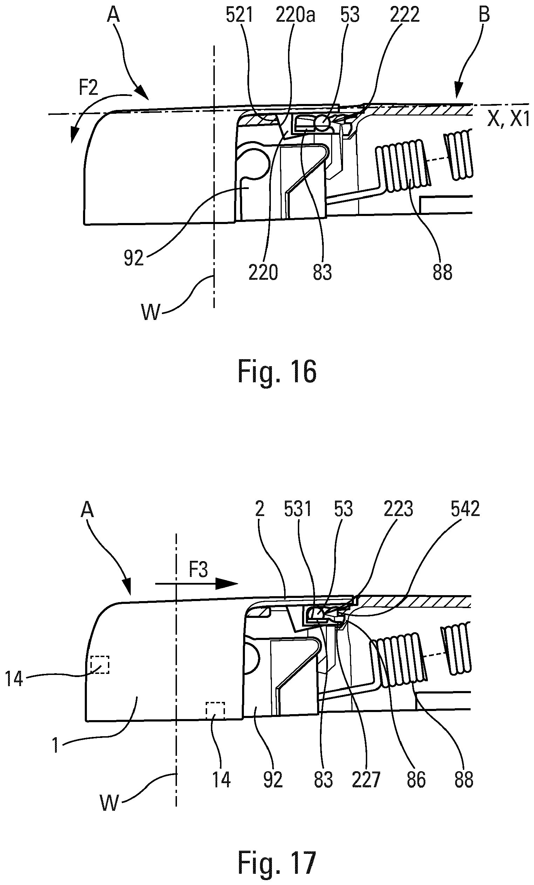

La figure 16 illustre la deuxième étape du procédé d'assemblage du capuchon A sur le bras d'entraînement B. Cette deuxième étape consiste en une rotation illustrée par la flèche référencée F2, opérée par un glissement entre la zone de rotation 222 et l'arbre d'engagement 53. A l'issue de cette rotation, l'axe longitudinal X du capuchon A est aligné avec l'axe longitudinal X1 du bras d'entraînement B. Le capuchon A est alors prêt à être verrouillé sur le bras d'entraînement B puisque la nervure longitudinale 83 est alignée avec l'encoche 531 ménagée dans l'arbre d'engagement 53.

La figure 16 illustre une autre particularité de l'invention. En effet, un bord arrière 220a bordant la paroi de rattachement 220 est en appui contre la paroi arrière 521 de la poche de verrouillage 52. Une telle disposition forme une butée lorsque le capuchon A doit être déverrouillé, imposant ainsi un mouvement de rotation pour décaler le capuchon A et intervenir sur l'arbre motorisé W.

La figure 17 montre la troisième étape du procédé d'assemblage du capuchon A sur le bras d'entraînement B. Cette troisième étape consiste en un verrouillage du capuchon A sur le bras d'entraînement B, moyennant une translation du capuchon A selon la flèche référencée F3. Pendant cette translation, la nervure longitudinale 83 entre dans l'encoche 531 et une face libre de cette nervure vient en contact contre le méplat 530. La nervure longitudinale 83 est alors guidée par l'encoche 531. On remarque par ailleurs que la nervure longitudinale 83 participe du verrouillage du capuchon A, puisqu'elle s'oppose à une rotation du capuchon A quand celle-ci est logé dans l'encoche 531. Dans une telle position, la dent d'entrée 227 vient en appui contre la paroi interne 90 du bras d'entraînement B. selon l'exemple illustré ici, la face inférieure 21 et la dent d'entrée 227 prennent en sandwich le fond 542 situé entre la tranche 84 de la poche de réception 512 et la paroi 541 qui délimite le dégagement 54.

Concomitamment à ce mouvement final de translation, la ou les dents de blocage 14 agencées en partie inférieure de la face intérieure de la paroi latérale du corps 1 du capuchon A viennent avantageusement se placer sous le bord inférieur de la paroi arrière de l'anse ou, plus généralement, selon le mode de réalisation choisi, sous un bord inférieur du bras d'entraînement B, réalisant ainsi un moyen de blocage du capuchon A avec ce bras d'entraînement, au moins selon la direction verticale.

Le capuchon A se trouve ainsi verrouillé avec le bras d'entraînement B au moins :
- par l'engagement de l'arbre 53 du bras d'entraînement B dans la zone de verrouillage 223 du capuchon A, et/ou
- par la coopération des parois latérales de la patte 2 du capuchon A avec les parois latérales 540 du dégagement 54 agencé dans le bras d'entraînement B, et/ou
- par la coopération de la dent de blocage 14 agencée dans le capuchon A avec un bord inférieur 412 ou 31 du bras d'entraînement B.

Pour désaccoupler le capuchon A et le bras d'entraînement B, il convient de procéder en sens inverse des étapes d'assemblage décrites ci-dessus.

## Revendications

1. Bras d'entraînement (B) d'un système d'essuyage d'un véhicule, comprenant une extrémité avant apte à accueillir un balai d'essuyage, une extrémité arrière apte à être lié à un arbre motorisé par l'intermédiaire d'un entraîneur, ainsi qu'un corps (3) situé entre ces deux extrémités, **caractérisé en ce qu'**il comprend, à son extrémité arrière, une anse (4) dans laquelle est agencé un orifice d'accueil (6) de l'arbre motorisé, et **en ce qu'**il comprend, entre cette anse (4) et son corps (3), au moins une poche de réception (51) et une poche de verrouillage (52) aptes à coopérer avec un capuchon (A) qui couvre l'anse (4).

2. Bras d'entraînement (B) selon la revendication 1, dans lequel la poche de verrouillage (52) est placée, selon un axe longitudinal (X1) dans lequel s'étend le bras d'entraînement (B), entre la poche de réception (51) et l'orifice d'accueil (6).

3. Bras d'entraînement (B) selon les revendications 1 ou 2, dans lequel une dimension transversale (d₅₁) de la poche de réception (51) est supérieure à une dimension transversale (d₅₂) de la poche de verrouillage (52).

4. Bras d'entraînement selon l'une quelconque des revendications précédentes, dans lequel poche de réception (51) et poche de verrouillage (52) sont séparées l'une de l'autre par un arbre d'engagement (53).

5. Bras d'entraînement selon la revendication précédente, dans lequel l'arbre d'engagement (53) est au moins en partie de section cylindrique et comprend notamment un méplat (530).

6. Bras d'entraînement (B) selon l'une quelconque des revendications précédentes, présentant un dégagement (54) délimité au moins par deux parois latérales (540) et en retrait par rapport à une surface supérieure (30) du corps (3) du bras d'entraînement (B), au moins une desdites parois latérales (540) étant à niveau avec ladite surface supérieure (30).

7. Bras d'entraînement (B) selon la revendication précédente, dans lequel une dimension transversale (d₅₂) de la poche de verrouillage (52) est inférieure à une dimension transversale (d₅₄₀) séparant les deux parois latérales (540), mesurées le long d'une même droite.

8. Capuchon (A), apte à couvrir l'anse (4) d'un bras (B) selon l'une quelconque des revendications précédentes et agencé pour coopérer avec au moins une poche de réception (51) et une poche de verrouillage (52) dudit bras,
le capuchon comprenant une première portion (1) apte à couvrir une première extrémité du bras d'entraînement (B), et une deuxième portion (2) comprenant un moyen de fixation (89) pour fixer le capuchon (A) sur le bras d'entraînement (B),
**caractérisé en ce que** ce moyen de fixation comprend au moins une zone de rotation (222) agencée pour autoriser une rotation du capuchon (A) par rapport au bras d'entraînement (B), et une zone de verrouillage (223) dudit capuchon (A) sur ledit bras d'entraînement (B), la deuxième portion (2) se présentant sous la forme d'une patte qui s'étend longitudinalement à l'opposé d'une cavité (10) délimitée par la première portion (1).

9. Capuchon (A) selon la revendication 8, dans lequel la zone de rotation (222) est séparée de la zone de verrouillage (223) au moins par un ergot (228), notamment en forme de pointe.

10. Capuchon (A) selon l'une quelconque des revendications 8 et 9, dans lequel la zone de rotation (222) et la zone de verrouillage (223) sont délimitées par au moins un appendice (22) qui s'étend à partir d'une face inférieure (21) de la deuxième portion (2).

11. Capuchon (A) selon la revendication précédente, dans lequel la zone de rotation (222) et la zone de verrouillage (223) se présentent sous forme de creux ménagés dans une lame (221) de l'appendice (22).

12. Capuchon (A) selon l'une quelconque des revendications 8 à 11, dans lequel la zone de rotation (222) est ménagée entre la zone de verrouillage (223) et une extrémité distale (224) de la deuxième portion (2), selon un axe longitudinal (X) du capuchon (A).

13. Capuchon (A) selon l'une quelconque des revendications 8 à 12, dans lequel la zone de rotation (222) comprend une entrée (61) bordée au moins en partie par une dent d'entrée (227).

14. Capuchon (A) selon la revendication précédente, dans lequel l'entrée (61) est bordée par une extrémité distale (224) de la deuxième portion (2).

15. Capuchon (A) selon l'une quelconque des revendications 8 à 14, dans lequel la zone de verrouillage (223) comprend une nervure longitudinale (83).

16. Capuchon (A) selon l'une quelconque des revendications 8 à 15, dans lequel la première portion (1) délimite une cavité (10) ouverte à son extrémité inférieure et fermée à son extrémité supérieure par une paroi (12), une face supérieure (20) de la deuxième portion (2) s'étendant dans un plan sensiblement parallèle à un plan dans lequel s'étend la paroi (12).

17. Capuchon (A) selon la revendication précédente, dans lequel la première portion (1) comprend au moins une paroi latérale (11) qui délimite au moins la cavité (10) et qui s'étend de l'extrémité inférieure de la cavité (10) à la paroi (12), et dans lequel une échancrure (15) est agencée dans la paroi latérale (11) de cette cavité (10).

18. Ensemble constitué d'un bras d'entraînement selon l'une quelconque des revendications 1 à 7 et un capuchon selon l'une quelconque des revendications 8 à 17.

19. Ensemble selon la revendication précédente, dans lequel la zone de rotation (222) s'étend dans la poche de réception (51), tandis que la zone de verrouillage (223) s'étend dans la poche de verrouillage (52), un arbre d'engagement (53) du bras d'entraînement (B) étant reçu dans la zone de verrouillage (223).

20. Ensemble selon la revendication précédente, dans lequel une nervure longitudinale (83) du capuchon (A), qui fait partie de la zone de verrouillage (223), s'étend dans une encoche (531) ménagée dans l'arbre d'engagement (53).

21. Procédé d'assemblage d'un capuchon (A) sur un bras d'entraînement (B) d'un système d'essuyage (75), comportant au moins les étapes suivantes :
a. engagement d'une deuxième portion (2) du capuchon (A) dans une poche de réception (51) du bras d'entraînement (B), de telle manière qu'une face supérieure (224) d'une dent d'entrée (227) du capuchon (A) soit engagée contre un méplat (530) d'un arbre d'engagement (53) du bras d'entraînement (B),
b. translation du capuchon (A) selon un axe longitudinal de la deuxième portion (2), jusqu'à ce que l'arbre d'engagement (53) soit inséré dans une zone de rotation (222) d'un appendice (22) du capuchon (A),
c. rotation du capuchon (A) autour de l'arbre d'engagement (53) jusqu'à amener une face supérieure (20) de la deuxième portion (2) du capuchon (A) dans une position sensiblement parallèle à une face supérieure (30) d'un corps (3) du bras d'entraînement (B),
d. verrouillage du capuchon (A) avec le bras d'entraînement (B) par une translation vers une extrémité avant du bras d'entraînement (B) jusqu'à ce que l'arbre d'engagement (53) soit accueilli dans une zone de verrouillage (223) du capuchon (A).

## Patentansprüche

1. Antriebsarm (B) eines Reinigungssystems eines Fahrzeugs, umfassend ein vorderes Ende, das geeignet ist, ein Scheibenwischerblatt aufzunehmen, ein hinteres Ende, das geeignet ist, mit einer über ein Antriebselement motorisierten Welle verbunden zu sein, sowie einen Körper (3), der sich zwischen diesen zwei Enden befindet, **dadurch gekennzeichnet, dass** er an seinem hinteren Ende eine Einbuchtung (4) umfasst, in der eine Aufnahmeöffnung (6) der motorisierten Welle angeordnet ist, und dass er zwischen dieser Einbuchtung (4) und seinem Körper (3) mindestens eine Aufnahmetasche (51) und eine Verriegelungstasche (52) umfasst, die geeignet sind, mit einer Kappe (A), die die Einbuchtung (4) bedeckt, zusammenzuwirken.

2. Antriebsarm (B) nach Anspruch 1, bei dem die Verriegelungstasche (52) entlang einer Längsachse (X1), in der sich der Antriebsarm (B) erstreckt, zwischen der Aufnahmetasche (51) und der Aufnahmeöffnung (6) angeordnet ist.

3. Antriebsarm (B) nach den Ansprüchen 1 oder 2, bei dem eine Querabmessung (d₅₁) der Aufnahmetasche (51) größer als eine Querabmessung (d₅₂) der Verriegelungstasche (52) ist.

4. Antriebsarm nach einem der vorhergehenden Ansprüche, bei dem die Aufnahmetasche (51) und die Verriegelungstasche (52) voneinander durch eine Eingriffswelle (53) getrennt sind.

5. Antriebsarm nach dem vorhergehenden Anspruch, bei dem die Eingriffswelle (53) zumindest teilweise einen zylindrischen Querschnitt hat und insbesondere eine Abflachung (530) umfasst.

6. Antriebsarm (B) nach einem der vorhergehenden Ansprüche, umfassend eine Ausnehmung (54), die von mindestens zwei Seitenwänden (540) begrenzt ist und in Bezug zu einer Oberfläche (30) des Körpers (3) des Antriebsarms (B) zurückgesetzt ist, wobei mindestens eine der Seitenwände (540) mit der Oberfläche (30) auf einer Höhe ist.

7. Antriebsarm (B) nach dem vorhergehenden Anspruch, bei dem eine Querabmessung (d₅₂) der Verriegelungstasche (52) kleiner als eine Querabmessung (d₅₄₀) zwischen den zwei Trennwänden (540), gemessen entlang einer selben Geraden, ist.

8. Kappe (A), die geeignet ist, die Einbuchtung (4) eines Arms (B) nach einem der vorhergehenden Ansprüche zu öffnen, und die dazu vorgesehen ist, mit mindestens einer Aufnahmetasche (51) und einer Verriegelungstasche (52) des Arms zusammenzuwirken,
wobei die Kappe einen ersten Abschnitt (1), der geeignet ist, ein erstes Ende des Antriebsarms (B) abzudecken, und einen zweiten Abschnitt (2) umfasst, der ein Befestigungsmittel (89) umfasst, um die Kappe (A) auf dem Antriebsarm (B) zu befestigen,
**dadurch gekennzeichnet, dass** dieses Befestigungsmittel mindestens eine Rotationszone (222) umfasst, die dazu vorgesehen ist, eine Rotation der Kappe (A) in Bezug zum Antriebsarm (B) zu gestatten, und eine Verriegelungszone (223) der Kappe (A) auf dem Antriebsarm (B), wobei der zweite Abschnitt (2) in Form einer Klaue vorhanden ist, die sich längs gegenüber einem Hohlraum (10) erstreckt, der von dem ersten Abschnitt (1) begrenzt ist.

9. Kappe (A) nach Anspruch 8, bei der die Rotationszone (222) von der Verriegelungszone (223) zumindest durch einen Haken (228), insbesondere in Form einer Spitze, getrennt ist.

10. Kappe (A) nach einem der Ansprüche 8 und 9, bei der die Rotationszone (222) und die Verriegelungszone (223) durch mindestens einen Anhang (22) begrenzt sind, der sich von einer Unterseite (21) des zweiten Abschnitts (2) aus erstreckt.

11. Kappe (A) nach dem vorhergehenden Anspruch, bei der die Rotationszone (222) und die Verriegelungszone (223) in Form von Hohlräumen vorhanden sind, die in einem Blättchen (221) des Anhangs (22) vorgesehen sind.

12. Kappe (A) nach einem der Ansprüche 8 bis 11, bei der die Rotationszone (222) zwischen der Verriegelungszone (223) und einem distalen Ende (224) des zweiten Abschnitts (2) entlang einer Längsachse (X) der Kappe (A) vorgesehen ist.

13. Kappe (A) nach einem der Ansprüche 8 bis 12, bei der die Rotationszone (222) einen Eingang (61) umfasst, der zumindest teilweise von einem Eingangszahn (227) umrahmt ist.

14. Kappe (A) nach dem vorhergehenden Anspruch, bei der der Eingang (61) von einem distalen Ende (224) des zweiten Abschnitts (2) umrahmt ist.

15. Kappe (A) nach einem der Ansprüche 8 bis 14, bei der die Verriegelungszone (223) eine Längsrippe (83) umfasst.

16. Kappe (A) nach einem der Ansprüche 8 bis 15, bei der der erste Abschnitt (1) einen Hohlraum (10) begrenzt, der an seinem unteren Ende offen und an einem oberen Ende durch eine Wand (12) geschlossen ist, wobei sich eine Oberseite (20) des zweiten Abschnitts (2) in einer Ebene im Wesentlichen parallel zu einer Ebene erstreckt, in der sich die Wand (12) erstreckt.

17. Kappe (A) nach dem vorhergehenden Anspruch, bei der der erste Abschnitt (1) mindestens eine Seitenwand (11) umfasst, die mindestens den Hohlraum (10) begrenzt, und die sich von dem unteren Ende des Hohlraums (10) zur Wand (12) erstreckt, und bei der ein bogenförmiger Ausschnitt (15) in der Seitenwand (11) dieses Hohlraums (10) vorgesehen ist.

18. Anordnung, die von einem Antriebsarm nach einem der Ansprüche 1 bis 7 und einer Kappe nach einem der Ansprüche 8 bis 17 gebildet ist.

19. Anordnung nach dem vorhergehenden Anspruch, bei der sich die Rotationszone (222) in der Aufnahmetasche (51) erstreckt, während sich die Verriegelungszone (223) in der Verriegelungstasche (52) erstreckt, wobei eine Eingriffswelle (53) des Antriebsarms (B) in der Verriegelungszone (223) aufgenommen wird.

20. Anordnung nach dem vorhergehenden Anspruch, bei der sich eine Längsrippe (83) der Kappe (A), die Teil der Verriegelungszone (223) ist, in einer Kerbe (531) erstreckt, die in der Eingriffswelle (53) vorgesehen ist.

21. Verfahren zur Montage einer Kappe (A) auf einem Antriebsarm (B) eines Reinigungssystems (75), umfassend mindestens die folgenden Schritte:
a. Eingreifen eines zweiten Abschnitts (2) der Kappe (A) in eine Aufnahmetasche (51) des Antriebsarms (B), so dass eine Oberseite (224) eines Eingangszahns (227) der Kappe (A) gegen eine Abflachung (530) einer Eingriffswelle (53) des Antriebsarms (B) in Eingriff ist,
b. Translation der Kappe (A) entlang einer Längsachse des zweiten Abschnitts (2), bis die Eingriffsachse (53) in eine Rotationsachse (222) eines Anhangs (22) der Kappe (A) eingesetzt ist,
c. Rotation der Kappe (A) um die Eingriffswelle (53), bis eine Oberseite (20) des zweiten Abschnitts (2) der Kappe (A) in eine Position im Wesentlichen parallel zu einer Oberseite (30) eines Körpers (3) des Antriebsarms (B) gebracht ist,
d. Verriegelung der Kappe (A) mit dem Antriebsarm (B) durch eine Translation zu einem vorderen Ende des Antriebsarms (B), bis die Eingriffswelle (53) in einer Verriegelungszone (223) der Kappe (A) aufgenommen ist.

## Claims

1. Wiper arm (B) for a wiping system of a vehicle, comprising a front end that is able to receive a wiper blade, a rear end that is able to be connected to a motorized shaft via the intermediary of a drive, and a body (3) located between the front and rear ends, **characterized in that** it comprises, at its rear end, an arch (4) in which is arranged an opening (6) for receiving the motorized shaft, and **in that** it comprises, between this arch (4) and its body (3), at least one receiving pocket (51) and one locking pocket (52) that are able to engage with a cap (A) that covers the arch (4).

2. Wiper arm(B) according to Claim 1, in which the locking pocket (52) is placed, along a longitudinal axis (X1) in which extends the wiper arm(B), between the receiving pocket (51) and the accommodating opening (6).

3. Wiper arm(B) according to Claim 1 or 1, in which a transverse dimension (d₅₁) of the receiving pocket (51) is greater than a transverse dimension (d₅₂) of the locking pocket (52).

4. Wiper arm(B) wiper armaccording to any preceding Claims, in which the receiving pocket (51) and the locking pocket (52) are separated from one another by an engagement bar (53).

5. Wiper arm(B) according to the preceding claim, in which the engagement bar (53) is at least partially cylindrical and in particular comprises a flat (530) .

6. Wiper arm(B) according to any preceding Claims, having a clear area (54) delimited at least by two side walls (540) and set back from an upper surface (30) of the body (3) of the wiper arm(B), at least one of said side walls (540) being level with said upper surface (30).

7. Wiper arm(B) according to the preceding claim, in which a transverse dimension (d₅₂) of the locking pocket (52) is less than a transverse dimension (d₅₄₀) separating the two side walls (540), as measured along one and the same straight line.

8. Cap (A), configured to cover the arch (4) of a wiper arm (B) according to any preceding Claims and configured to engage with at least one receiving pocket (51) and one locking pocket (52) of said wiper arm,
the cap comprising a first portion (1) that is able to cover a first end of the wiper arm(B) and a second portion (2) comprising an attachment means (89) for attaching the cap (A) to the wiper arm(B), **characterized in that** the attachment means comprises at least one rotation zone (222) that is arranged so as to allow the cap (A) to rotate with respect to the wiper arm (B), and a locking zone (223) for locking said cap (A) to said wiper arm (B), the second portion (2) being in the form of a tab which extends longitudinally away from a cavity (10) delimited by the first portion (1).

9. Cap (A) according to Claim 8, in which the rotation zone (222) is separated from the locking zone (223) by at least one nib (228), in particular in the form of a spur.

10. Cap (A) according to any one of Claims 8 and 9, in which the rotation zone (222) and the locking zone (223) are delimited by at least one extension (22) which extends from a lower face (21) of the second portion (2).

11. Cap (A) according to the preceding claim, in which the rotation zone (222) and the locking zone (223) are in the form of hollows created in a blade (221) of the extension (22).

12. Cap (A) according to any one of claims 8 to 11, in which the rotation zone (222) is created between the locking zone (223) and a distal end (224) of the second portion (2), as seen in a longitudinal axis (X) of the cap (A).

13. Cap (A) according to any one of claims 8 to 12, in which the rotation zone (222) comprises an entrance (61) bounded at least in part by an entrance lug (227).

14. Cap (A) according to the preceding claim, in which the entrance (61) is bounded by a distal end (224) of the second portion (2).

15. Cap (A) according to any one of claims 8 to 14, in which the locking zone (223) comprises a longitudinal rib (83).

16. Cap (A) according to any one of claims 8 to 15, in which the first portion (1) delimits a cavity (10) that is open at its lower end and closed at its upper end by a wall (12), an upper face (20) of the second portion (2) extending in a plane that is essentially parallel to a plane in which extends the wall (12).

17. Cap (A) according to the preceding claim, in which the first portion (1) comprises at least one side wall (11) which delimits at least the cavity (10) and which extends from the lower end of the cavity (10) to the wall (12), and in which a cutout (15) is arranged in the side wall (11) of this cavity (10).

18. Assembly consisting of a wiper arm according to any one of Claims 1 to 7 and a cap according to any one of Claims 8 to 17.

19. Assembly according to the preceding claim, in which the rotation zone (222) extends in the receiving pocket (51), while the locking zone (223) extends in the locking pocket (52), an engagement bar (53) of the wiper arm(B) being received in the locking zone (223).

20. Assembly according to the preceding claim, in which a longitudinal rib (83) of the cap (A), which forms part of the locking zone (223), extends in a notch (531) created in the engagement bar (53).

21. Method for fitting a cap (A) to a wiper arm(B) of a wiping system (75), comprising at least the following steps:
a. engaging a second portion (2) of the cap (A) in a receiving pocket (51) of the wiper arm(B) such that an upper face (224) of an entrance lug (227) of the cap (A) is engaged against a flat (530) of an engagement bar (53) of the wiper arm(B),
b. translating the cap (A) along a longitudinal axis of the second portion (2) until the engagement bar (53) is inserted into a rotation zone (222) of extension (22) of the cap (A),
c. rotating the cap (A) about the engagement bar (53) until an upper face (20) of the second portion (2) of the cap (A) is brought into a position that is essentially parallel to an upper face (30) of a body (3) of the wiper arm(B),
d. locking the cap (A) to the wiper arm(B) by a translation towards a front end of the wiper arm(B) until the engagement bar (53) is received in a locking zone (223) of the cap (A).
